# EUROPEAN PATENT APPLICATION

(11) **EP 4 284 100 A1**
(43) Date of publication of application: **29.11.2023**
(21) Application number: 21920848.5
(22) Date of filing: 22.12.2021
(51) Int. Cl.: H04W 72/12

(54) **DATA TRANSMISSION METHOD AND APPARATUS, AND TERMINAL AND ACCESS NETWORK DEVICE**

(30) Priority: 21.01.2021 CN 202110084646
(71) Applicant: Datang Mobile Communications Equipment Co., Ltd., Beijing 100085 (CN)
(72) Inventor: ZHANG, Yujie, Beijing 100085 (CN); SUO, Shiqiang, Beijing 100085 (CN); BAI, Wei, Beijing 100085 (CN)
(74) Representative: Studio Torta S.p.A.
(86) International application number: PCT/CN2021/140589
(87) International publication number: WO 2022/156474

(57) **Abstract**

A data transmission method and apparatus, a terminal, and an access network device are provided. The method includes: in an access procedure of accessing a network side, sending first indication information to a network side device; where the first indication information indicates whether a first data packet is included in a data packet to be transmitted, and a data size of the first data packet is greater than or equal to a first preset threshold. Therefore, the network side device will schedule, according to the first indication information, the terminal to send the first data packet, so that the first data packet can be transmitted normally, thereby avoiding transmission delay caused by a large number of terminals, and ensuring transmission efficiency.

## Description

### CROSS REFERENCE OF RELATED APPLICATION

This disclosure claims the priority of the Chinese patent application with application number 202110084646.2 and titled "data transmission method and device, terminal, and access network device" submitted to the China Patent Office on January 21, 2021, the entire contents of which are incorporated by reference in this disclosure.

### TECHNICAL FIELD

The present disclosure relates to the technical field of mobile communication, and in particular to a data transmission method and apparatus, a terminal, and an access network device.

### BACKGROUND

With the rapid development of mobile communication technologies, the number of terminal devices accessing the network side increases year by year. It is estimated that by 2030, the number of terminal equipment will be more than six times that of 2020. Terminal equipment is mainly machine-type equipment. In terms of specific key technical indicators, the density of terminal equipment may reach tens of millions of terminals per square kilometer. The explosive growth of the number of terminal devices also puts forward stricter requirements for data transmission. For example, large data packets may be transmitted during the data transmission process. However, the existing access scheme on the access network side, cannot meet the data transmission requirements of a large number of terminal devices, therefore, it is necessary to provide an access solution that meets the data transmission of a large number of terminal devices.

### SUMMARY

A data transmission method and apparatus, a terminal, and an access network device are provided in the embodiments of the present disclosure, to provide an access solution that meets the data transmission of a large number of terminal devices

In a first aspect, a data transmission method is provided in an embodiment of the present disclosure, applied to a terminal and including:

in an access procedure of accessing a network side, sending first indication information to a network side device; where the first indication information indicates whether a first data packet is included in a data packet to be transmitted, and a data size of the first data packet is greater than or equal to a first preset threshold.

Optionally, subsequent to the sending the first indication information to the network side device, the method includes:
when the first indication information indicates that the data packet to be transmitted includes the first data packet, during the access procedure or after the access procedure is completed, sending the first data packet to the network side device.

Optionally, prior to the sending the first indication information to the network side device, the method further includes:
determining a terminal identification (ID) of the terminal, and sending the terminal ID to the network side device.

Optionally, the sending the terminal ID to the network side device includes:
carrying the terminal ID in a second data packet, and sending the second data packet to the network side device; where the second data packet is a preset data packet or a data size of the second data packet is smaller than a second preset threshold; the second preset threshold is less than or equal to the first preset threshold;
   or
generating a preamble of the access procedure according to the terminal ID;
carrying the terminal ID in the preamble of the access procedure, and sending the preamble to the network side device.

Optionally, the sending the first indication information to the network side device includes:
carrying the first indication information in the second data packet, and sending the second data packet to the network side device;
   or
carrying the first indication information in the preamble, and sending the preamble to the network side device.

Optionally, in the access procedure, sending the first data packet to the network side device includes:
sending the first data packet and a second data packet to the network side device; where the second data packet is a preset data packet or a data size of the second data packet is smaller than a second preset threshold; the second preset threshold is less than or equal to the first preset threshold.

Optionally, the sending the first data packet to the network side device includes:
determining a target subband corresponding to each preamble according to a mapping relationship between the preamble and a subband;
sending the first data packet to the network side device on each target subband.

Optionally, prior to the determining the target subband corresponding to each preamble according to the mapping relationship between the preamble and the subband, the method includes:
obtaining a frequency band and a preamble resource pre-allocated by the network side device for the terminal;
dividing the frequency band into N subbands, and dividing the preamble resource into M preamble groups; where M is greater than or equal to N; and
establishing the mapping relationship according to the subband and the preamble group.

Optionally, when the first data packet is sent to the network side device during the access procedure, the second data packet includes second indication information of the first data packet; where the second indication information includes at least one of the following configuration parameters:
a time domain position where the first data packet is sent, a frequency domain position where the first data packet is sent, a quantity of PRBs of the first data packet, a subcarrier spacing of the first data packet, and a quantity of symbols used by the first data packet.

Optionally, the second indication information is indicated in the second data packet by a first value; where each first value corresponds to a different configuration parameter combination;
or
each of the configuration parameters in the second indication information is indicated in a preset data bit in the second data packet by a second value; where each second value corresponds to a different value of the configuration parameter.

Optionally, subsequent to the sending the first data packet to the network side device, the method includes:
receiving response information sent by the network side device.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In a second aspect, a data transmission method is provided in an embodiment of the present disclosure, applied to a network side device and including:
receiving first indication information sent by a terminal in an access procedure of accessing a network side; where the first indication information indicates whether a first data packet is included in a data packet to be transmitted, and a data size of the first data packet is greater than or equal to a first preset threshold.

Optionally, when the first indication information indicates that the data packet to be transmitted includes the first data packet, subsequent to the receiving the first indication information sent by the terminal in the access procedure of accessing the network side, the method includes:
during the access procedure or after the access procedure is completed, receiving the first data packet sent by the terminal.

Optionally, prior to the receiving the first indication information sent by the terminal in the access procedure of accessing the network side, the method further includes:
receiving a terminal identification (ID) of the terminal.

Optionally, the receiving the terminal ID of the terminal includes:
receiving a second data packet sent by the terminal; where the second data packet carries the terminal ID; where the second data packet is a preset data packet or a data size of the second data packet is smaller than a second preset threshold; the second preset threshold is less than or equal to the first preset threshold;
   or
receiving a preamble of the access procedure sent by the terminal; where the preamble of the access procedure includes the terminal ID.

Optionally, the receiving the first indication information sent by the terminal in the access procedure of accessing the network side includes:
receiving the second data packet sent by the terminal; where the second data packet carries the first indication information;
   or
receiving the preamble sent by the terminal; where the preamble carries the first indication information.

Optionally, the receiving the first data packet sent by the terminal includes:
determining a target subband corresponding to each preamble according to a mapping relationship between the preamble and a subband;
receiving on each target subband the first data packet sent by the terminal.

Optionally, when the first data packet is received during the access procedure, the receiving the first data packet sent by the terminal includes:
receiving second indication information in the second data packet; where the second indication information includes at least one of the following configuration parameters:
a time domain position where the first data packet is sent by the terminal, a frequency domain position where the first data packet is sent by the terminal, a quantity of PRBs of the first data packet, a subcarrier spacing of the first data packet, and a quantity of symbols used by the first data packet.

Optionally, subsequent to the receiving the first data packet sent by the terminal, the method includes:
sending response information to the terminal.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In a third aspect, a terminal is further provided in an embodiment of the present disclosure, including:
a memory, a transceiver, a processor:
the memory is configured to store computer programs; the transceiver is configured to send and receive data under a control of the processor; the processor is configured to read the computer programs in the memory to perform:
in an access procedure of accessing a network side, sending first indication information to a network side device; where the first indication information indicates whether a first data packet is included in a data packet to be transmitted, and a data size of the first data packet is greater than or equal to a first preset threshold.

Optionally, subsequent to the sending the first indication information to the network side device, the processor performs:
when the first indication information indicates that the data packet to be transmitted includes the first data packet, during the access procedure or after the access procedure is completed, sending the first data packet to the network side device.

Optionally, prior to the sending the first indication information to the network side device, the processor performs:
determining a terminal identification (ID) of the terminal, and sending the terminal ID to the network side device.

Optionally, the sending the terminal ID to the network side device includes:
carrying the terminal ID in a second data packet, and sending the second data packet to the network side device; where the second data packet is a preset data packet or a data size of the second data packet is smaller than a second preset threshold; the second preset threshold is less than or equal to the first preset threshold;
   or
generating a preamble of the access procedure according to the terminal ID;
carrying the terminal ID in the preamble of the access procedure, and sending the preamble to the network side device.

Optionally, the sending the first indication information to the network side device includes:
carrying the first indication information in the second data packet, and sending the second data packet to the network side device;
   or
carrying the first indication information in the preamble, and sending the preamble to the network side device.

Optionally, in the access procedure, sending the first data packet to the network side device includes:
sending the first data packet and a second data packet to the network side device; where the second data packet is a preset data packet or a data size of the second data packet is smaller than a second preset threshold; the second preset threshold is less than or equal to the first preset threshold.

Optionally, the sending the first data packet to the network side device includes:
determining a target subband corresponding to each preamble according to a mapping relationship between the preamble and a subband;
sending the first data packet to the network side device on each target subband.

Optionally, prior to the determining the target subband corresponding to each preamble according to the mapping relationship between the preamble and the subband, the processor performs:
obtaining a frequency band and a preamble resource pre-allocated by the network side device for the terminal;
dividing the frequency band into N subbands, and dividing the preamble resource into M preamble groups; where M is greater than or equal to N; and
establishing the mapping relationship according to the subband and the preamble group.

Optionally, when the first data packet is sent to the network side device during the access procedure, the second data packet includes second indication information of the first data packet; where the second indication information includes at least one of the following configuration parameters:
a time domain position where the first data packet is sent, a frequency domain position where the first data packet is sent, a quantity of PRBs of the first data packet, a subcarrier spacing of the first data packet, and a quantity of symbols used by the first data packet.

Optionally, the second indication information is indicated in the second data packet by a first value; where each first value corresponds to a different configuration parameter combination;
or
each of the configuration parameters in the second indication information is indicated in a preset data bit in the second data packet by a second value; where each second value corresponds to a different value of the configuration parameter.

Optionally, subsequent to the sending the first data packet to the network side device, the processor performs:
receiving response information sent by the network side device.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In a fourth aspect, a network side device is provided in an embodiment of the present disclosure, including:
a memory, a transceiver, a processor:
the memory is configured to store computer programs; the transceiver is configured to send and receive data under a control of the processor; the processor is configured to read the computer programs in the memory to perform:
receiving first indication information sent by a terminal in an access procedure of accessing a network side; where the first indication information indicates whether a first data packet is included in a data packet to be transmitted, and a data size of the first data packet is greater than or equal to a first preset threshold.

Optionally, when the first indication information indicates that the data packet to be transmitted includes the first data packet, subsequent to the receiving the first indication information sent by the terminal in the access procedure of accessing the network side, the processor performs:
during the access procedure or after the access procedure is completed, receiving the first data packet sent by the terminal.

Optionally, prior to the receiving the first indication information sent by the terminal in the access procedure of accessing the network side, the processor performs:
receiving a terminal identification (ID) of the terminal.

Optionally, the receiving the terminal ID of the terminal includes:
receiving a second data packet sent by the terminal; where the second data packet carries the terminal ID; where the second data packet is a preset data packet or a data size of the second data packet is smaller than a second preset threshold; the second preset threshold is less than or equal to the first preset threshold;
   or
receiving a preamble of the access procedure sent by the terminal; where the preamble of the access procedure includes the terminal ID.

Optionally, the receiving the first indication information sent by the terminal in the access procedure of accessing the network side includes:
receiving the second data packet sent by the terminal; where the second data packet carries the first indication information;
   or
receiving the preamble sent by the terminal; where the preamble carries the first indication information.

Optionally, the receiving the first data packet sent by the terminal includes:
determining a target subband corresponding to each preamble according to a mapping relationship between the preamble and a subband;
receiving on each target subband the first data packet sent by the terminal.

Optionally, when the first data packet is received during the access procedure, the receiving the first data packet sent by the terminal includes:
receiving second indication information in the second data packet; where the second indication information includes at least one of the following configuration parameters:
a time domain position where the first data packet is sent by the terminal, a frequency domain position where the first data packet is sent by the terminal, a quantity of PRBs of the first data packet, a subcarrier spacing of the first data packet, and a quantity of symbols used by the first data packet.

Optionally, subsequent to the receiving the first data packet sent by the terminal, the processor performs:
sending response information to the terminal.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In a fifths aspect, a data transmission apparatus is provided in an embodiment of the present disclosure, applied to a terminal and including:
an information sending module, configured to, in an access procedure of accessing a network side, send first indication information to a network side device; where the first indication information indicates whether a first data packet is included in a data packet to be transmitted, and a data size of the first data packet is greater than or equal to a first preset threshold.

In a sixth aspect, a data transmission apparatus is provided in an embodiment of the present disclosure, applied to a network side device and including:
an information receiving module, configured to receive first indication information sent by a terminal in an access procedure of accessing a network side; where the first indication information indicates whether a first data packet is included in a data packet to be transmitted, and a data size of the first data packet is greater than or equal to a first preset threshold.

In a seventh aspect, an embodiment of the present disclosure further provides an electronic device, the electronic device includes a memory, a processor, and a computer program stored on the memory and operable on the processor, and the processor executes the computer program to perform the above method.

In an eighth aspect, the embodiments of the present disclosure further provide a processor-readable storage medium, where a computer program is stored on the processor-readable storage medium, and when the computer program is executed by a processor, the steps in the above method are implemented.

In a ninth aspect, an embodiment of the present disclosure provides a computer program, including computer readable code, when the computer readable code is run on a computing processing device, causes the computing processing device to perform the method in the above first aspect, or perform the method in the above second aspect.

In a tenth aspect, an embodiment of the present disclosure provides a computer-readable medium, in which the computer program in the ninth aspect is stored.

In an embodiment of the present disclosure, in the process of the terminal accessing the network side, the first indication information is used to indicate whether the data packet to be transmitted by the network side device includes the first data packet, and when the first data packet is subsequently sent, the network side device will schedule, according to the first indication information, the terminal to send the first data packet, so that the first data packet can be transmitted normally, thereby avoiding transmission delay caused by a large number of terminals, and ensuring transmission efficiency.

The above description is only an overview of the technical solution of the present disclosure. In order to better understand the technical means of the present disclosure, it can be implemented according to the contents of the description, and in order to make the above and other purposes, features and advantages of the present disclosure more obvious and understandable, the specific embodiments of the present disclosure are enumerated below.

### BRIEF DESCRIPTION OF THE DRAWINGS

In order to more clearly illustrate the technical solutions of the embodiments of the present disclosure, the following will briefly introduce the drawings that need to be used in the description of the embodiments of the present disclosure. Obviously, the drawings in the following description are only some embodiments of the present disclosure, those skilled in the art can also obtain other drawings based on these drawings without creative work.
Fig. 1 is a first flowchart of the data transmission method in an embodiment of the present disclosure;
Fig. 2 is a first schematic view of the first example in an embodiment of the present disclosure;
Fig. 3 is a second schematic view of the first example in an embodiment of the present disclosure;
Fig. 4 is a second flowchart of the data transmission method in an embodiment of the present disclosure;
Fig. 5 is a first structural block diagram of a data transmission apparatus in an embodiment of the present disclosure;
Fig. 6 is a second structural block diagram of a data transmission apparatus in an embodiment of the present disclosure;
Fig. 7 is a structural block diagram of a terminal in an embodiment of the present disclosure;
Fig. 8 is a structural block diagram of a network side device in an embodiment of the present disclosure;
Fig. 9 schematically illustrates a block diagram of a computing processing device for performing a method according to the present disclosure ; and
Fig. 10 schematically illustrates a storage unit for holding or carrying program codes for realizing the method according to the present disclosure.

### DETAILED DESCRIPTION

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described implementation Examples are some embodiments of the present disclosure, not all embodiments. Based on the embodiments in the present disclosure, all other embodiments obtained by persons of ordinary skill in the art without creative efforts fall within the protection scope of the present disclosure.

The term "and/or" in the embodiments of the present disclosure describes the association relationship of associated objects, indicating that there may be three relationships, for example, A and/or B, which may mean: A exists alone, A and B exist simultaneously, and B exists alone These three situations. The character "/" generally indicates that the contextual objects are an "or" relationship.

The term "multiple" in the embodiment of the present disclosure refers to two or more, and other quantifiers are similar.

The following will clearly and completely describe the technical solutions in the embodiments of the present disclosure with reference to the accompanying drawings in the embodiments of the present disclosure. Obviously, the described embodiments are only some of the embodiments of the present disclosure, not all of them. Based on the embodiments in the present disclosure, all other embodiments obtained by persons of ordinary skill in the art without making creative efforts belong to the protection scope of the present disclosure.

Embodiments of the present disclosure provide a data transmission method and device, a terminal, and an access network device, so as to provide an access solution that satisfies data transmission of a large number of terminal devices.

Among them, the method and the device are conceived based on the same application. Since the principle of solving problems of the method and the device is similar, the implementation of the device and the method can be referred to each other, and the repetition will not be repeated.

In addition, the technical solutions in an embodiment of the present disclosure may be applicable to various systems, especially 5G systems. For example, the applicable system may be global system of mobile communication (GSM) system, code division multiple access (code division multiple access, CDMA) system, wideband code division multiple access (Wideband Code Division Multiple Access, WCDMA) general packet Wireless service (general packet radio service, GPRS) system, long term evolution (long term evolution, LTE) system, LTE frequency division duplex (frequency division duplex, FDD) system, LTE time division duplex (time division duplex, TDD) system, Long term evolution advanced (LTE-A) system, universal mobile telecommunications system (UMTS), worldwide interoperability for microwave access (WiMAX) system, 5G new air interface (New Radio, NR) system, etc. These various systems include end devices and network devices. The system may also include a core network part, such as an evolved packet system (Evolved Packet System, EPS), a 5G system (5GS), and the like.

The terminal device in the embodiment of the present disclosure may be a device that provides voice and/or data connectivity to users, a handheld device with a wireless connection function, or other processing devices connected to a wireless modem. In different systems, the name of the terminal equipment may be different. For example, in a 5G system, the terminal equipment may be called user equipment (User Equipment, UE). Wireless terminal equipment can communicate with one or more core networks (Core Network, CN) via a radio access network (Radio Access Network, RAN). The wireless terminal equipment can be a mobile terminal equipment, such as a mobile phone (or called a "cellular "telephones) and computers with mobile terminal equipment, such as portable, pocket, hand-held, computer built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistant, PDA) and other devices. Wireless terminal equipment can also be called system, subscriber unit, subscriber station, mobile station, mobile station, remote station, access point, a remote terminal device (remote terminal), an access terminal device (access terminal), a user terminal device (user terminal), a user agent ( user agent), and a user device (user device), which are not limited in the embodiments of the present disclosure.

The network device in the embodiment of the present disclosure may be a base station, and the base station may include multiple cells that provide services for terminals. Depending on the specific application, the base station can also be called an access point, or it can be a device in the access network that communicates with the wireless terminal device through one or more sectors on the air interface, or other names. Network devices can be used to interchange received over-the-air frames with Internet Protocol (IP) packets and act as routers between wireless end devices and the rest of the access network, which can include the Internet Protocol (IP) communication network. Network devices may also coordinate attribute management for the air interface. For example, the network device involved in this embodiment of the present disclosure may be a network device (Base Transceiver Station, BTS) in Global System for Mobile communications (GSM) or Code Division Multiple Access (CDMA). ), or a network device (NodeB) in Wide-band Code Division Multiple Access (WCDMA) , or an evolved network device in a long term evolution (LTE) system (evolutional Node B, eNB or e-NodeB , 5G base station (gNB) in the 5G network architecture (next generation system) , it can also be a home evolved base station (Home evolved Node B, HeNB), relay node (relay node) , a home base station (femto), a pico base station (pico), etc., are not limited in this embodiment of the present disclosure. In some network structures, a network device may include a centralized unit (centralized unit, CU) node and a distributed unit (distributed unit, DU) node, and the centralized unit and the distributed unit may also be arranged geographically separately.

One or more antennas can be used between network devices and terminal devices for Multi Input Multi Output (MIMO) transmission, and MIMO transmission can be Single User MIMO (Single User MIMO, SU-MIMO) or Multi-User MIMO (Multiple User MIMO, MU-MIMO). According to the shape and number of root antenna combinations, MIMO transmission can be 2D-MIMO, 3D-MIMO, FD-MIMO, or massive-MIMO, or diversity transmission, precoding transmission, or beamforming transmission, etc.

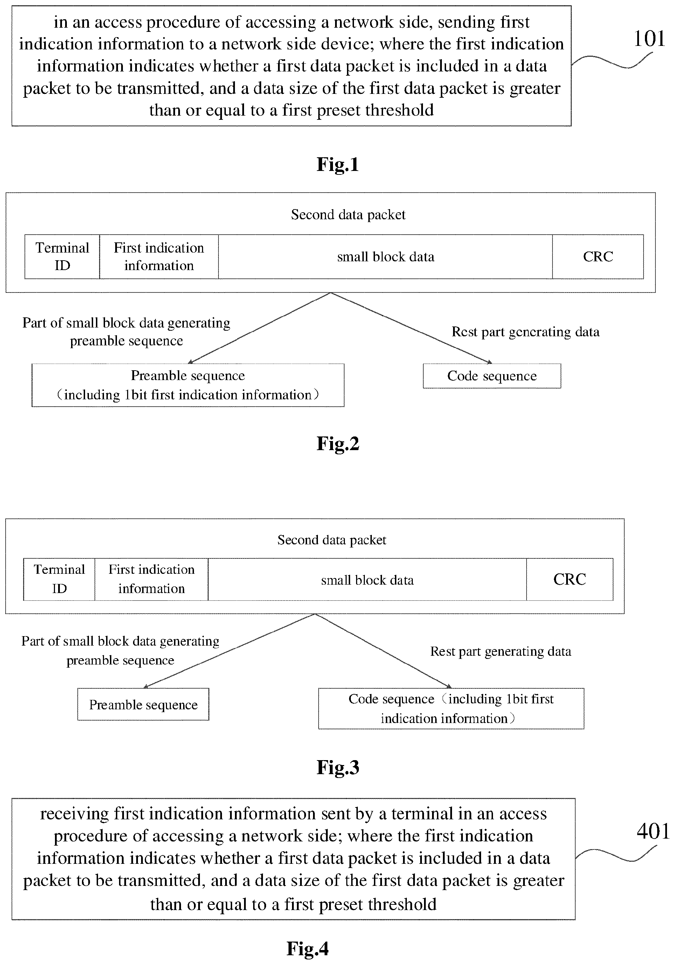

Fig. 1 is a schematic flowchart of a data transmission method in an embodiment of the present disclosure.

As shown in Fig. 1, an embodiment of the present disclosure provides a data transmission method applied to a terminal, and the method includes:
Step 101, in an access procedure of accessing a network side, sending first indication information to a network side device; where the first indication information indicates whether a first data packet is included in a data packet to be transmitted, and a data size of the first data packet is greater than or equal to a first preset threshold.

In the process of the terminal accessing the network side (such as the core network), the first indication information is sent to the network side device , and the first indication information indicates whether a first data packet is included in a data packet to be transmitted; where the data packet to be transmitted is the data packet to be transmitted to the network side device; the data size of the first data packet is greater than or equal to the first preset threshold, for example, the first preset threshold is 320 bits (bit), for the data packet whose data size is greater than or equal to the first preset threshold, the data size is relatively large, the first indication information is sent to the network side device in advance to indicate whether a first data packet is included in a data packet to be transmitted by the network side device; optionally, if the first indication information indicates that the data packet to be transmitted includes the first data packet, the first data packet can be sent according to the scheduling of the network side device after waiting for the response of the network side device; it can also be, based on the preconfiguration of the network side device, large blocks of data are sent during the access procedure. Optionally, the first indication information may occupy 1 bit of data. For example, when the first indication information is 1, it means that the data packets to be transmitted include the first data packet; when the first indication information is 0, it means that the data packets to be transmitted do not include the first data packet.

In this way, when sending the first data packet subsequently, the network- side device will schedule the terminal to send the first data packet according to the first indication information, so that the first data packet is transmitted normally, and the transmission delay caused by a large number of terminals is avoided; In the case of a large number of terminal devices, it is impossible to use Orthogonal Frequency Division Multiple Access (OFDMA) that requires prior coordination for access.

For the Random Access Channel (RACH) scenario, since a large number of terminal devices need to access the network and transmit data, usually each terminal has a small data packet, however, a certain terminal may occasionally need to Large chunks of data (such as the first packet) are transmitted. For this scenario, if it is handled according to the RACH method, it will cause a delay problem, and it will also be limited by the coordination resources of the network side during the access procedure, resulting in further expansion of the delay.

In addition, if the compressed sensing scheme with giant address access is adopted, because the compressed sensing scheme transmits a small amount of data each time, for the large block of data such as the first data packet, it needs to be divided into many small data blocks and sequentially follow the compressed sensing However, due to the huge number of terminals and the large data block of the first data packet, serious data collisions will occur, resulting in a large delay and low transmission efficiency.

In an embodiment of the present disclosure, in the process of the terminal accessing the network side, the first indication information is used to indicate whether the data packet to be transmitted by the network side device includes the first data packet, and when the first data packet is subsequently sent, the network side The device will schedule the terminal to send the first data packet according to the first indication information, so that the first data packet can be transmitted normally, avoiding transmission delay caused by a large number of terminals, and ensuring transmission efficiency. Embodiments of the present disclosure provide an access solution that satisfies the data transmission of a large number of terminal devices.

In an optional embodiment, subsequent to the sending the first indication information to the network side device, the method includes:
when the first indication information indicates that the data packet to be transmitted includes the first data packet, during the access procedure or after the access procedure is completed, sending the first data packet to the network side device.

For the case where the first data packet is sent after completing the access procedure, the terminal first performs the access procedure and waits for a response message sent by the network side device. When the response message indicates that the terminal successfully accesses the network side, the terminal sends the first data packet according to the scheduling of the network side device.

For the case where the sending of the first data packet is carried out simultaneously with the access procedure, when the terminal performs access, the first data packet is sent at the same time. At this time, the first data packet does not occupy the bandwidth of the access, and can be Send data at the location. After the terminal successfully accesses, the network side device responds to the sending of the first data packet, and indicates the scheduling information of the first data packet to be sent by the subsequent terminal.

In an optional embodiment, before sending the first indication information to the network side device, the method further includes:
determining a terminal identification (ID) of the terminal, and sending the terminal ID to the network side device.
where the terminal identification number ID may include at least one of the following parameters: terminal preset identity information, International Mobile Subscriber Identity (IMSI), Internet Protocol (Internet Protocol, IP) address, media access control bit Address (Media Access Control Address, MAC) and geographic location information; before sending the first indication information, first send the terminal ID to the network side device.

In an optional embodiment, the sending the terminal ID to the network side device includes method 1 or method 2:
Method 1, carrying the terminal ID in a second data packet, and sending the second data packet to the network side device; where the second data packet is a preset data packet or a data size of the second data packet is smaller than a second preset threshold; the second preset threshold is less than or equal to the first preset threshold;
   carrying the terminal ID in a second data packet and sending it to the network side device, where the second data packet also includes some high-level data.
Method 2, generating the preamble of the access procedure according to the terminal ID;
   carrying the terminal ID in the preamble of the access procedure, and sending the preamble to the network side device.
   using the preamble to send the terminal ID, encoding or sequence-mapping the terminal ID or the terminal ID with other information to obtain the sequence number of the preamble, and selecting the corresponding preamble from the set of preambles for transmission. Other information may be, for example, a cyclic redundancy check (Cyclic Redundancy Check, CRC), data information, and/or first indication information.

In an optional embodiment, the sending the first indication information to the network side device includes method 1 or method 2:
Method 1, carrying the first indication information in the second data packet, and sending the second data packet to the network side device;
   carrying the first indication information in a second data packet and sending it to the network side device, where the second data packet also includes some high-level data.
Method 2: carrying the first indication information in the preamble, and sending the preamble to the network side device.

The preamble is used to send the first indication information, the sequence number of the preamble is obtained by encoding or sequence mapping based on the first indication signal and other information, and the corresponding preamble is selected from the set of preambles for transmission. Other information may be, for example, CRC, data information and/or terminal ID. After receiving the preamble, the second data packet, and the first data packet sent by the terminal, the network side device performs decoding processing, and responds to the terminal. The response information on the network side may include a further scheduling instruction of the first data packet, and the terminal determines further sending of the subsequent first data packet according to the new data scheduling instruction. Optionally, the network side may instruct the terminal to send configuration information according to the initial time-frequency position of the first data packet, and then the terminal sends the first data packet, or may allocate other time-frequency positions for the terminal to send the first data packet. For a specific terminal user, such as a high-priority (high-urgent) terminal, after the access is completed, the network side will schedule appropriate new resources to send the first data packet of the terminal.

In this way, in the above method 1 and method 2, the sending of the first indication information has the following cases 1 to 4:
Case 1: both the terminal ID and the first indication information are sent in the second data packet, for example, the second data packet consists of: the terminal ID, the first indication information plus layer data, and the sending indication information of the first data packet ;
Case 2: the terminal ID is sent in the second data packet, and the first indication information is sent using the preamble, then the second data packet data consists of: terminal ID, high-level data, and sending indication information of the first data packet;
Case 3: the first indication information is sent in the second data packet, and the terminal ID is sent using the preamble, then the second data packet consists of: the first indication information, high-level data, and sending indication information of the first data packet;
Case 4: both the terminal ID and the first indication information are sent in the preamble, then the second data packet consists of: high-layer data and the sending indication information of the first data packet.

Correspondingly, the sending of the preamble sequence has the following cases 1 to 4:
In case 1, both the terminal ID and the first indication information are sent in the second data packet:
performing CRC encoding on the second data packet to obtain CRC check bits, using CRC check bits, the combined sequence mapping obtained by encoding the CRC check bits and other information, to obtain the sequence number of the preamble, and selecting the corresponding preamble sequence to send; other information may be data information or the like.

In case 2, the terminal ID is sent in the second data packet, and the first indication information is sent using the preamble:
performing CRC encoding on the second data packet to obtain CRC check bits, use the first indication information plus CRC check bits, a combination of the first indication information, CRC check bits and other information, to perform encoding or sequence mapping to obtain the preamble number, selecting the corresponding preamble sequence to send; other information may be data information, and/or terminal ID, etc.;

In case 3, the first indication information is sent in the second data packet, and the terminal ID is sent using the preamble:
performing CRC encoding on the second data packet to obtain CRC check bits, and using the combination of terminal ID and CRC check bits, or the combination of terminal ID and CRC check bits and other information, to perform encoding or sequence mapping to obtain the sequence number of the preamble, select a corresponding preamble sequence to send; other information may be data information, and/or first indication information, and the like.

In case 4, both the terminal ID and the first indication information are sent in the preamble:
performing CRC encoding on the second data packet to obtain CRC check bits, and use a set of terminal ID, first indication information, CRC check bits, or a combination of terminal ID, first indication information, CRC check bits, and other information to perform encoding or sequence mapping, to obtain the sequence number of the preamble, and select the corresponding preamble sequence to send; other information can be data information, etc.

As a first example, Fig. 2 and Fig. 3 respectively show schematic diagrams of a second data packet, where the second data packet shown in Fig. 2 includes a terminal ID, first indication information, small block data, and CRC; where a part of the small block data generates a preamble, and the preamble includes 1-bit first indication information; the remaining part generates a coding sequence;

In Fig. 3, the second data packet includes terminal ID, first indication information, small block data and CRC; where a part of the small block data generates a preamble sequence (that is, a preamble sequence); the remaining part generates a coding sequence, and in the coding sequence It includes 1-bit first indication information.

In an optional embodiment, during the access procedure, sending the first data packet to the network side device includes:
sending the first data packet and a second data packet to the network side device; the second data packet is a preset data packet or the data size of the second data packet is smaller than a second preset threshold; the second preset threshold is less than or equal to the first preset threshold, and during the sending process, the first data packet and the second data packet may use the same or different time-frequency resources.

In an optional embodiment, the sending the first data packet to the network side device includes:
determining a target subband corresponding to each preamble according to a mapping relationship between the preamble and the subband;
sending the first data packet to the network side device on each target subband.

In order to reduce collisions during data transmission, during transmission, according to the mapping relationship between preambles and subbands, the first data packet is transmitted on the target subband corresponding to each preamble.

Specifically, before determining the target subband corresponding to each preamble according to a mapping relationship between the preamble and the subband, the method includes:
obtaining a frequency band and a preamble resource pre-allocated by the network side device for the terminal;
dividing the frequency band into N subbands, and dividing the preamble resource into M preamble groups; where M is greater than or equal to N;
establishing the mapping relationship according to the subband and the preamble group.
where the frequency band occupied by the sending of the first data packet is the frequency band pre-allocated by the network side device to the terminal for use. In order to reduce collisions, the network side device divides the frequency band, for example, divides the frequency band into N subbands. At the same time, the preamble resources are grouped into M groups of preamble resources. The division and grouping of the frequency band and the preamble may be equally dividing or non-equally dividing.

Mapping M groups of preambles to N subbands, each group of preambles corresponds to a subband, and one subband can be corresponding to one or more groups of preambles. Where M can be greater than N or equal to N. According to the generated preamble sequence, the subband used for sending the first data packet can be mapped out.

In an optional embodiment, when the first data packet is sent to the network side device during the access procedure, the second data packet includes second indication information of the first data packet; where the second indication information includes at least one of the following configuration parameters:
a time domain position where the first data packet is sent, a frequency domain position where the first data packet is sent, the number of physical resource blocks (Physical Resource Blocks, PRB) of the first data packet, the first data packet The subcarrier spacing of and the number of symbols used by the first data packet. where the time domain position is a time offset between when the first data packet is sent and the end position of the second data packet.

In an optional embodiment, the second indication information is indicated in the second data packet by a first value; where each first value corresponds to a different combination of the configuration parameters;
or
each of the configuration parameters in the second indication information is indicated in a preset data bit in the second data packet by a second value; where each second value corresponds to a different value of the configuration parameter.

When the second indication information is indicated by the first value in the second data packet, parameters such as at least one of the frequency domain position, the time domain position, the number of PRBs, the subcarrier spacing, and the number of used symbols corresponding to the first value are preset. For example, when the first value includes 0 to 127, there are 128 different configuration situations in total. Correspondingly, 7bits can be used to indicate the first value. According to the specific value of 7bits, the corresponding configuration index can be mapped to realize an indication of the transmission of the first data packet.

When each of the configuration parameters in the second indication information is indicated by the second value in the preset data bit in the second data packet, for example, k0+k1+k2+...+kn bits are used to carry out the first data In the indication of the packet, k0 to kn respectively correspond to different preset data bits. For example, use k0=3 bits to indicate a total of 8 subbands divided by the available frequency band; use k1=3 bits to indicate a total of 5 subcarrier spacing configurations, that is, "000" means SCS=15kHz, "001" means SCS= 30kHz, etc.; correspondingly, k2 to kn bits respectively indicate the configuration information for sending the corresponding first data packet.

In an optional embodiment, after sending the first data packet to the network side device, the method includes:
receiving the response information sent by the network side device, the response information is the confirmation information fed back when the network side receives the data packet; The first data packet is sent repeatedly, and redundancy versions (Redundancy Version, RV) during repeated sending may be the same or different.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time, and the terminal continues to generate subsequent first data packets according to the data scheduling information.

As a second example, the data transmission method provided in the embodiment of the present disclosure mainly includes the following steps:
Step 1, cell search.
   The terminal executes the cell search process, realizes downlink time-frequency synchronization of the terminal, and acquires access transmission configuration information of the cell, including access transmission resource configuration information and transmission mode information.
Step 2, sending the terminal ID.
Step 3, the sending of the first data indicating information;
Step 4, based on Step 2 and Step 2, determine the preamble sequence used by the terminal.
Step 5, based on step 2 and step 2, determine the data composition in the second data packet;
   It is divided into two cases of sending the first data packet and not sending the first data packet, and includes the sending timing of the first data packet.
Step 6, sending the preamble sequence.
Step 7, according to the configuration information of the access transmission, encode the small packet data, and after operations such as scrambling, interleaving, modulation, spreading, and precoding, map to corresponding resources for transmission;
Step 8, when the first data packet needs to be sent, based on step five, the first data packet is sent.
Step 9, within the time window, detect and receive the response information sent by the network side device.

When the first data packet is not sent: the response information includes the second confirmation information ACK2, the serial number of the preamble sequence, the terminal ID, etc.;

When sending the first data packet: if the first data packet is sent after the access is completed: the response information includes the second acknowledgment information ACK2, the serial number of the preamble sequence and/or the terminal ID, etc.

If the sending of the first data and the new type access are performed at the same time: the response information includes the second acknowledgment information ACK2, the first acknowledgment information ACK1, data scheduling information, the serial number of the preamble sequence and/or the terminal ID, etc.

Step 10, this access and transmission are judged.

If the first data packet is sent after the new type of access is completed: if the second confirmation message ACK2 is received, the time window is automatically terminated, and the access and the second data packet are sent successfully. Afterwards, the first data packet is sent according to the network side scheduling; if the second confirmation message ACK2 is not received within the time window, this access and the second data packet transmission fail, and the traditional access and transmission process is started, or Enable the error reporting mechanism.

If the sending of the first data packet and the new type of access are performed at the same time: (1) If the second confirmation message ACK2 is not received within the time window, the access and sending fail this time, and the traditional access and transmission process is started, or Enable the error reporting mechanism; (2) If the second confirmation message ACK2 is received, the time window will automatically expire, and this access and the second data packet will be sent successfully; (3) If the second confirmation message ACK2 is received, and When the first data acknowledgment information ACK1 is received, it means that the first data packet sent this time is received successfully. If there is still the first data packet to be sent, the first data packet to be sent next time is the new first data packet; (4) If the second confirmation information ACK2 is received but the first confirmation information ACK1 is not received, it means The first data packet sent this time fails to be received, and the first data packet sent next time is still the current first data packet.

According to the embodiment of the present disclosure, in the process of the terminal accessing the network side, the first indication information is used to indicate whether the data packet to be transmitted by the network side device includes the first data packet, and when the first data packet is subsequently sent, the network side The device will schedule the terminal to send the first data packet according to the first indication information, so that the first data packet can be transmitted normally, avoiding transmission delay caused by a large number of terminals, and ensuring transmission efficiency.

Referring to Fig. 4 , an embodiment of the present disclosure also provides a data transmission method, which is applied to a network side device, and the method includes:

Step 401, receiving first indication information sent by a terminal in an access procedure of accessing a network side; where the first indication information indicates whether a first data packet is included in a data packet to be transmitted, and a data size of the first data packet is greater than or equal to a first preset threshold.

where during the process of the terminal accessing the network side (such as the core network), the network side device receives the first indication information sent by the terminal, and the first indication information indicates whether a first data packet is included in a data packet to be transmitted; The transmission data packet is the data packet to be transmitted to the network side device; the data size of the first data packet is greater than or equal to the first preset threshold, for example, the first preset threshold is 320 bits (bit), and the data size of the first data packet is greater than or equal to the first preset threshold. For the first data packet with a threshold value, the data size is relatively large, and sending first indication information to a network side device in advance to indicate whether a first data packet is included in a data packet to be transmitted by the network side device; optionally, if the first The indication information indicates that the data packets to be transmitted include the first data packet, and the first data packet can be sent according to the scheduling of the network side device after waiting for the response of the network side device; it can also be according to the preconfiguration of the network side device, sending large blocks of data during the access procedure. Optionally, the first indication information may occupy 1 bit of data. For example, when the first indication information is 1, it means that the data packets to be transmitted include the first data packet; when the first indication information is 0, it means that the data packets to be transmitted do not include the first data packet.

In this way, when the terminal subsequently sends the first data packet, the network side device will schedule the terminal to send the first data packet according to the first indication information, so that the first data packet is transmitted normally, and avoids transmission delay caused by a large number of terminals; and In the case of a large number of terminal devices, it is impossible to use OFDMA or the like that requires prior coordination for access.

For the RACH scenario, since a large number of terminal devices need to access the network and transmit data, usually each terminal is a data packet with a small data size, but a certain terminal may occasionally need to send a large block of data (such as the first data packet) transmission. For this scenario, if it is handled according to the RACH method, it will cause a delay problem, and it will also be limited by the coordination resources of the network side during the access procedure, resulting in further expansion of the delay.

In addition, if the compressed sensing scheme with giant address access is adopted, because the compressed sensing scheme transmits a small amount of data each time, for the large block of data such as the first data packet, it needs to be divided into many small data blocks and sequentially follow the compressed sensing However, due to the huge number of terminals and the large data block of the first data packet, serious data collisions will occur, resulting in a large delay and low transmission efficiency.

According to the embodiment of the present disclosure, during the terminal access procedure to the network side, the network side device receives the first indication information sent by the terminal in an access procedure of accessing a network side, and uses the first indication information to instruct the network side device to wait whether the first data packet is included in the transmission data packet, when sending the first data packet subsequently, the network side device will schedule the terminal to send the first data packet according to the first indication information, so that the first data packet can be transmitted normally, thereby avoiding the problem of transmission delay caused by the large number of terminals, which ensures the efficiency of transmission.

In an optional embodiment, when the first indication information indicates that the data packet to be transmitted includes the first data packet, subsequent to the receiving the first indication information sent by the terminal in the access procedure of accessing the network side, the method includes:
during the access procedure or after the access procedure is completed, receiving the first data packet sent by the terminal.

For the case where the first data packet is sent after completing the access procedure, the terminal first performs the access procedure and waits for a response message sent by the network side device. When the response message indicates that the terminal successfully accesses the network After connecting, the terminal sends the first data packet according to the scheduling of the network -side device, and the network-side device receives the first data packet after the terminal access is completed.

For the case where the sending of the first data packet is carried out simultaneously with the access procedure, when the terminal performs access, the first data packet is sent at the same time. At this time, the first data packet does not occupy the bandwidth of the access, and can be Send data at the location. After the terminal successfully accesses, the network side device responds to the sending of the first data packet, and indicates the scheduling information of the first data packet to be sent by the subsequent terminal.

In an optional embodiment, before receiving first indication information sent by a terminal in an access procedure of accessing a network side, the method further includes:
receiving a terminal identification (ID) of the terminal.
where the terminal identification number ID may include at least one of the following parameters: terminal preset identity information, IMSI, IP address, MAC and geographic location information; before receiving the first indication information, the network side device receives the terminal ID in advance .

In an optional embodiment, the receiving the terminal identification number ID of the terminal includes:
receiving a second data packet sent by the terminal; where the second data packet carries the terminal ID; the second data packet is a preset data packet or the data size of the second data packet is smaller than the second preset threshold; the second preset threshold is less than or equal to the first preset threshold; the terminal carries the terminal ID in a second data packet and sends it to the network side device, where the second data packet also includes some high-level data ;
   or
receiving the preamble of the access procedure sent by the terminal; the preamble of the access procedure includes the terminal ID; the terminal uses the preamble to send the terminal ID, and the network side device receives the preamble; the preamble can The sequence number of the preamble is obtained based on the terminal ID or the terminal ID and other information through encoding or sequence mapping, and the corresponding preamble is selected from the set of preambles for transmission. Other information may be, for example, a cyclic redundancy check (Cyclic Redundancy Check, CRC), data information, and/or first indication information.

In an optional embodiment, the first indication information sent by the receiving terminal in an access procedure of accessing a network side includes:
receiving the second data packet sent by the terminal; the second data packet carries the first indication information; the terminal carries the first indication information in the second data packet and sends it to the network side device, and the network side device receives the first indication information For the second data packet, reverse operations such as scrambling, interleaving, modulation, spread spectrum, precoding, etc. are performed on the configured resource position for sending the second data packet, and then the decoding of the second data packet is performed, and the first indication information therein is obtained; in addition, the second data packet also includes some high-level data;
   or
receiving the preamble sent by the terminal; the preamble carries the first indication information.

The terminal uses the preamble to send the first indication information, and the network side device receives the preamble to perform channel estimation, and extracts the first indication information; specifically, the terminal performs encoding or sequence mapping based on the first indication letter and other information to obtain the number of preamble, select the corresponding preamble from the set of preambles to send. Other information can be, for example, CRC, data information and/or terminal ID. After receiving the preamble, the second data packet, and the first data packet sent by the terminal, the network side device performs decoding processing, and responds to the terminal. The response information on the network side may include a further scheduling indication of the first data packet, and the terminal determines further sending of the subsequent first data packet according to the new data scheduling instruction. Optionally, the network side device may instruct the terminal to send configuration information according to the initial time-frequency position of the first data packet, and then the terminal sends the first data packet, or may allocate other time-frequency positions for the terminal to send the first data packet.
the network side device checks the first data packet after receiving CRC check code.

In an optional embodiment, the receiving the first data packet sent by the terminal includes:
determining a target subband corresponding to each preamble according to a mapping relationship between the preamble and the subband;
receiving the first data packet sent by the terminal on each of the target subbands.

In order to reduce collisions during data transmission, during transmission, according to the mapping relationship between preambles and subbands, the terminal transmits the first data packet on the target subband corresponding to each preamble, and accordingly, the network side device receives first data packet on the target subband.

In an optional embodiment, when the first data packet is received during the access procedure, receiving the first data packet sent by the terminal includes:
receiving second indication information in the second data packet; where the second indication information includes at least one of the following configuration parameters:

The time domain position at which the terminal sends the first data packet, the frequency domain position at which the terminal sends the first data packet, the number of PRBs in the first data packet, and the subcarrier of the first data packet The interval and the number of symbols used by the first data packet, where the time domain position is the time offset between when the first data packet is sent and the end position of the second data packet.

In an optional embodiment, subsequent to the receiving the first data packet sent by the terminal, the method includes:
sending response information to the terminal; the response information can be sent through a physical downlink control channel (Physical Downlink Control Channel, PDCCH), or through a PDCCH indicating a corresponding physical downlink shared channel (Physical Downlink Shared Channel, PDSCH).

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;

The data scheduling information instructs the terminal to send the time-frequency configuration information of the first data packet next time, and the terminal continues to generate subsequent first data packets according to the data scheduling information.

When the terminal does not send the first data packet: the response information includes the second confirmation information ACK2, the serial number of the preamble sequence, the terminal ID, etc.;

When the terminal sends the first data packet, if the first data packet is sent after the access is completed: the response information includes the second acknowledgment information ACK2, the sequence number of the preamble sequence and/or the terminal ID, etc. The network - side device performs a CRC check on the second data packet, and if it passes the check, it proves that the access is successful; otherwise, the access fails; if the access is successful, a response message is sent to the terminal, and the response message includes the second confirmation message ACK2 , the second confirmation message ACK2 is a confirmation of the correct reception of the small packet data, including the sequence number of the preamble; if the access is successful, then follow the data scheduling process to schedule the sending of the first data packet; if the access fails, no response is sent information.

When the terminal sends the first data packet, if the sending of the first data is performed simultaneously with the new type of access: the response information includes the second acknowledgment information ACK2, the first acknowledgment information ACK1, data scheduling information, the sequence number of the preamble and/or the terminal ID etc.; the network side device obtains CRC check bits, first indication information, terminal ID, high-layer data information, second indication information of the first data packet in the access procedure, and the like. A CRC check is performed on the second data packet, and when the check can pass, it proves that the access is successful; otherwise, the access fails. If the access fails, no response information is sent; if the access is successful, according to the second indication information of the first data packet, reverse operations such as scrambling, interleaving, modulation, spreading, precoding, etc. are performed on the data at the time-frequency position , at the same time perform the same processing with the corresponding first data packet (if any) previously sent by the terminal in the network buffer area , and then combine and decode the first data packet sent multiple times.

When the decoding is successful, and the terminal ID in the first data packet is consistent with the terminal ID sent by the previous terminal, it proves that the first data packet is received successfully, and the first confirmation information ACK1 is sent, including the sequence number of the preamble.

When the second acknowledgment information ACK2 is sent at the same time, it indicates that the corresponding second data packet is received successfully; otherwise, the first data packet fails to be received, and only the first acknowledgment information ACK1 is sent.

After sending the response message, the network side device decodes the second data packet at the access resource location within the preset period T, if the decoding fails to pass the CRC check bit check, then find the next period T, repeat the operation from data receiving to decoding;

If the decoding of the second data packet passes the check of the CRC check bits, extracting the user identity information and high-level data from the decoded bits, and submitting them to the high-level in the network architecture;

If the decoding of the second data packet passes the check of the CRC check bit, and the first data packet is successfully received, submitting the corresponding first data packet to the upper layer;

If the decoding of the second data packet fails to pass the check of the CRC check bits after the maximum number of times of sending the preamble sequence is reached, no processing is performed.

According to an embodiment of of the present disclosure, during the terminal access procedure to the network side, the network side device receives the first indication information sent by the terminal in an access procedure of accessing a network side, and uses the first indication information to instruct the network side device to wait Whether the first data packet is included in the transmission data packet, when sending the first data packet subsequently, the network side device will schedule the terminal to send the first data packet according to the first indication information, so that the first data packet can be transmitted normally, avoiding the problem of transmission delay caused by the large number of terminals, which ensures the efficiency of transmission.

In an embodiment of the present disclosure is described above, and the data transmission apparatus in an embodiment of the present disclosure will be described below with reference to the drawings.

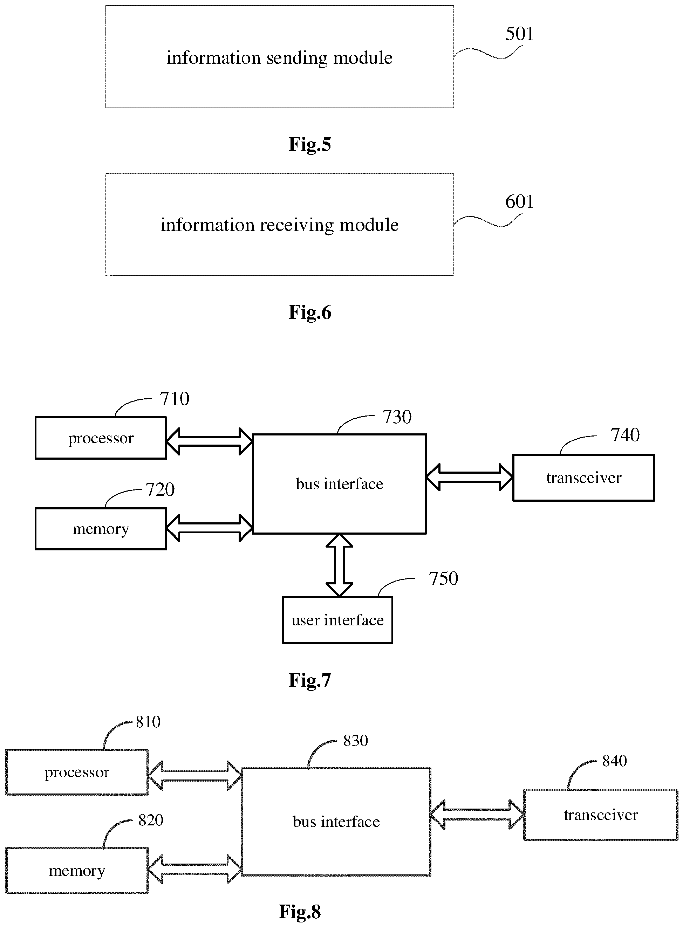

Referring to Fig. 5, an embodiment of the present disclosure also provides a data transmission apparatus, which is applied to a terminal, and the device includes:
an information sending module 501, configured to, in an access procedure of accessing a network side, send first indication information to a network side device; where the first indication information indicates whether a first data packet is included in a data packet to be transmitted, and a data size of the first data packet is greater than or equal to a first preset threshold.
where in the process of the terminal accessing the network side (such as the core network), the first indication information is sent to the network side device , and the first indication information indicates whether a first data packet is included in a data packet to be transmitted; where the data to be transmitted is the data packet to be transmitted to the network side device; the data size of the first data packet is greater than or equal to the first preset threshold, for example, the first preset threshold is 320 bits (bit), for the first data packet which a data size greater than or equal to the first preset threshold value, the data size thereof is large, and sending first indication information to a network side device in advance to indicate whether a first data packet is included in a data packet to be transmitted by the network side device; optionally, if the first indication information indicates that the data packet to be transmitted includes the first data packet, the sending of the first data packet may be performed according to the scheduling of the network side device after waiting for the network side device to respond; large blocks of data may be sent during the access procedure based on the preconfiguration of the network side device. Optionally, the first indication information may occupy 1 bit of data. For example, when the first indication information is 1, it means that the data packets to be transmitted include the first data packet; when the first indication information is 0, it means that the data packets to be transmitted do not include the first data packet.

In this way, when sending the first data packet subsequently, the network- side device will schedule the terminal to send the first data packet according to the first indication information, so that the first data packet is transmitted normally, and the transmission delay caused by a large number of terminals is avoided; In the case of a large number of terminal devices, it is impossible to use OFDMA, which needs to be coordinated in advance, for access.

For the RACH scenario, since a large number of terminal devices need to access the network and transmit data, usually each terminal is a data packet with a small data size, but a certain terminal may occasionally need to send a large block of data (such as the first data packet) transmission. For this scenario, if it is handled according to the RACH method, it will cause a delay problem, and it will also be limited by the coordination resources of the network side during the access procedure, resulting in further expansion of the delay.

In addition, if the compressed sensing scheme with giant address access is adopted, because the compressed sensing scheme transmits a small amount of data each time, for the large block of data such as the first data packet, it needs to be divided into many small data blocks and sequentially follow the compressed sensing However, due to the huge number of terminals and the large data block of the first data packet, serious data collisions will occur, resulting in a large delay and low transmission efficiency.

Optionally, in the embodiment of the present disclosure, the device includes:

The first sending module is configured to, if the first indication information indicates that the data packet to be transmitted includes the first data packet, during the access procedure or after the access procedure is completed, send to the network side device the first data packet.

Optionally, in the embodiment of the present disclosure, the device further includes:
an ID determination module, configured to determine the terminal identification number ID of the terminal, and send the terminal ID to the network side device.

Optionally, in the embodiment of the present disclosure, the ID determination module includes:
a first sending submodule, configured to carry the terminal ID in a second data packet, and send the second data packet to the network side device; the second data packet is a preset data packet or the data size of the second data packet is less than a second preset threshold; the second preset threshold is less than or equal to the first preset threshold;
   or
a second sending submodule, configured to generate a preamble of the access procedure according to the terminal ID;
carry the terminal ID in the preamble of the access procedure, and sending the preamble to the network side device.

Optionally, in the embodiment of the present disclosure, the information sending module 501 includes:
a third sending submodule, configured to carry the first indication information in a second data packet, and send the second data packet to the network side device;
   or
a fourth sending submodule, configured to carry the first indication information in the preamble, and send the preamble to the network side device.

Optionally, in the embodiment of the present disclosure, the first sending module is configured to:
In the access procedure, the first data packet and the second data packet are sent to the network side device; the second data packet is a preset data packet or the data size of the second data packet is less than a second preset threshold; the second preset threshold is less than or equal to the first preset threshold.

Optionally, in the embodiment of the present disclosure, the first sending module includes:
a subband determining submodule, configured to determine a target subband corresponding to each preamble according to a mapping relationship between a preamble and a subband;
a fifth sending submodule, configured to send the first data packet to the network side device on each of the target subbands.

Optionally, in the embodiment of the present disclosure, the device includes:
a subband allocation module, configured to obtain the frequency band and preamble resource pre-allocated by the network side device for the terminal;
divide the frequency band into N subbands, and dividing the preamble resource into M preamble groups; where M is greater than or equal to N;
establish the mapping relationship according to the subband and the preamble group.

Optionally, in this embodiment of the present disclosure, when the first data packet is sent to the network side device during the access procedure, the second data packet includes the second indication information of the first data packet; where the second indication information includes at least one of the following configuration parameters:
a time domain position where the first data packet is sent, a frequency domain position where the first data packet is sent, a quantity of PRBs of the first data packet, a subcarrier spacing of the first data packet, and a quantity of symbols used by the first data packet.

Optionally, in the embodiment of the present disclosure, the second indication information is indicated in the second data packet by a first value; where each first value corresponds to a different combination of the configuration parameters;
or
each of the configuration parameters in the second indication information is indicated in a preset data bit in the second data packet by a second value; where each second value corresponds to a different value of the configuration parameter.

Optionally, in the embodiment of the present disclosure, the device includes:
a response receiving module is configured to receive the response information sent by the network side device.

Optionally, in this embodiment of the present disclosure, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

According to the embodiment of the present disclosure, during the process of the terminal accessing the network side, the information sending module 501 indicates whether a first data packet is included in a data packet to be transmitted by the network side device through the first indication information, and when the first data packet is subsequently sent, so that the network side device will schedule the terminal to send the first data packet according to the first indication information, so that the first data packet can be transmitted normally, avoiding transmission delay caused by a large number of terminals, and ensuring transmission efficiency. Embodiments of the present disclosure provide an access solution that satisfies the data transmission of a large number of terminal devices.

Referring to Fig. 6, an embodiment of the present disclosure also provides a data transmission apparatus, which is applied to a terminal, and the device includes:
an information receiving module 601, configured to receive first indication information sent by a terminal in an access procedure of accessing a network side; where the first indication information indicates whether a first data packet is included in a data packet to be transmitted, and a data size of the first data packet is greater than or equal to a first preset threshold.
where in the process of the terminal accessing the network side (such as the core network), the first indication information is sent to the network side device , and the first indication information indicates whether a first data packet is included in a data packet to be transmitted; where the data to be transmitted is the data packet to be transmitted to the network side device; the data size of the first data packet is greater than or equal to the first preset threshold, for example, the first preset threshold is 320 bits (bit), for the first data packet which a data size greater than or equal to the first preset threshold value, the data size thereof is large, and sending first indication information to a network side device in advance to indicate whether a first data packet is included in a data packet to be transmitted by the network side device; optionally, if the first indication information indicates that the data packet to be transmitted includes the first data packet, the sending of the first data packet may be performed according to the scheduling of the network side device after waiting for the network side device to respond; large blocks of data may be sent during the access procedure based on the preconfiguration of the network side device. Optionally, the first indication information may occupy 1 bit of data. For example, when the first indication information is 1, it means that the data packets to be transmitted include the first data packet; when the first indication information is 0, it means that the data packets to be transmitted do not include the first data packet.

In this way, when the terminal subsequently sends the first data packet, the network side device will schedule the terminal to send the first data packet according to the first indication information, so that the first data packet is transmitted normally, and avoids transmission delay caused by a large number of terminals; and In the case of a large number of terminal devices, it is impossible to use OFDMA or the like that requires prior coordination for access.

For the RACH scenario, since a large number of terminal devices need to access the network and transmit data, usually each terminal is a data packet with a small data size, but a certain terminal may occasionally need to send a large block of data (such as the first data packet) transmission. For this scenario, if it is handled according to the RACH method, it will cause a delay problem, and it will also be limited by the coordination resources of the network side during the access procedure, resulting in further expansion of the delay.

In addition, if the compressed sensing scheme with giant address access is adopted, because the compressed sensing scheme transmits a small amount of data each time, for the large block of data such as the first data packet, it needs to be divided into many small data blocks and sequentially follow the compressed sensing However, due to the huge number of terminals and the large data block of the first data packet, serious data collisions will occur, resulting in a large delay and low transmission efficiency.

Optionally, in the embodiment of the present disclosure, the device includes:
a first receiving module, configured to: if the first indication information indicates that the data packet to be transmitted includes the first data packet, the information receiving module 601 receives the information sent by the terminal in an access procedure of accessing a network side After the first instruction message of the
during the access procedure or after the access procedure is completed, receive the first data packet sent by the terminal.

Optionally, in this embodiment of the present disclosure, before the first indication information sent by the receiving terminal in an access procedure of accessing a network side, the apparatus further includes:
an ID receiving module, configured to receive the terminal identification number ID of the terminal.

Optionally, in the embodiment of the present disclosure, the ID receiving module includes:
a first receiving submodule, configured to receive the second data packet sent by the terminal; where the second data packet carries the terminal ID; the second data packet is a preset data packet or the second The data size of the data packet is less than a second preset threshold; the second preset threshold is less than or equal to the first preset threshold;
   or
a second receiving submodule, configured to receive the preamble of the access procedure sent by the terminal; the preamble of the access procedure includes the terminal ID.

Optionally, in the embodiment of the present disclosure, the information receiving module 601 includes:
a third receiving submodule, configured to receive a second data packet sent by the terminal; the second data packet carries the first indication information;
   or
a fourth receiving submodule is configured to receive the preamble sent by the terminal; the preamble carries the first indication information.

Optionally, in the embodiment of the present disclosure, the first receiving module includes:
a target determination submodule, configured to determine a target subband corresponding to each preamble according to a mapping relationship between a preamble and a subband;
a fifth receiving submodule, configured to receive the first data packet sent by the terminal on each of the target subbands.

Optionally, in the embodiment of the present disclosure, the first receiving module includes:
a sixth receiving submodule, configured to receive second indication information in the second data packet when the first data packet is received during the access procedure; where the second indication information includes at least one of the configuration parameters:
the time domain position at which the terminal sends the first data packet, the frequency domain position at which the terminal sends the first data packet, the number of PRBs in the first data packet, and the subcarrier of the first data packet interval and the number of symbols used by the first packet.

Optionally, in the embodiment of the present disclosure, the device includes:
a response sending module, configured to, after the information receiving module 601 receives the first data packet sent by the terminal,
send response information to the terminal.

Optionally, in this embodiment of the present disclosure, the response information includes at least one of a first confirmation message, a second confirmation message, and data scheduling information;
where the first confirmation message indicates that the first data packet is received by the network side device;
the second confirmation message indicates that the second data packet is received by the network side device;

The data scheduling information instructs the terminal to send time-frequency configuration information of the first data packet next time.

According to the embodiment of the present disclosure, during the terminal access procedure to the network side, the network side device receives the first indication information sent by the terminal in an access procedure of accessing a network side, and uses the first indication information to instruct the network side device to wait Whether the first data packet is included in the transmission data packet, when sending the first data packet subsequently, the network side device will schedule the terminal to send the first data packet according to the first indication information, so that the first data packet can be transmitted normally, avoiding the problem caused by the number of terminals More will cause transmission delay, which ensures the efficiency of transmission.

It should be noted that the division of the modules (units) in the embodiment of the present disclosure is schematic, and is only a logical function division, and there may be another division manner in actual implementation. In addition, each functional module in each embodiment of the present disclosure may be integrated into one processing module, each module may exist separately physically, or two or more modules may be integrated into one module. The above-mentioned integrated modules can be implemented in the form of hardware or in the form of software function modules.

If the integrated modules are realized in the form of software function modules and sold or used as independent products, they can be stored in a processor-readable storage medium. Based on this understanding, the technical solution of the present disclosure is essentially or part of the contribution to the prior art, or all or part of the technical solution can be embodied in the form of a software product, and the computer software product is stored in a storage medium , including several instructions for causing a computer device (which may be a personal computer, server, or network device, etc.) or a processor (processor) to execute all or part of the steps of the methods described in various embodiments of the present disclosure. The aforementioned storage media include: U disk, mobile hard disk, read-only memory (Read-Only Memory, ROM), random access memory (Random Access Memory, RAM), magnetic disk or optical disk and other media that can store program codes..

What needs to be explained here is that the above-mentioned device in an embodiment of the present disclosure can realize all the method steps realized by the above-mentioned method embodiment, and can achieve the same technical effect. The part and the beneficial effect are described in detail.

As shown in Fig. 7 , an embodiment of the present disclosure also provides a terminal, including a memory 720, a transceiver 740, and a processor 710;
the memory 720 is configured to store computer programs
the transceiver 740 is configured to send and receive data under a control of the processor
the processor 710 is configured to read the computer programs in the memory to perform:
in an access procedure of accessing a network side, sending first indication information to a network side device; where the first indication information indicates whether a first data packet is included in a data packet to be transmitted, and a data size of the first data packet is greater than or equal to a first preset threshold.

Optionally, subsequent to the sending the first indication information to the network side device, the processor performs:
when the first indication information indicates that the data packet to be transmitted includes the first data packet, during the access procedure or after the access procedure is completed, sending the first data packet to the network side device.

Optionally, prior to the sending the first indication information to the network side device, the processor performs:
determining a terminal identification (ID) of the terminal, and sending the terminal ID to the network side device.

Optionally, the sending the terminal ID to the network side device includes:
carrying the terminal ID in a second data packet, and sending the second data packet to the network side device; where the second data packet is a preset data packet or a data size of the second data packet is smaller than a second preset threshold; the second preset threshold is less than or equal to the first preset threshold;
   or
generating a preamble of the access procedure according to the terminal ID;
carrying the terminal ID in the preamble of the access procedure, and sending the preamble to the network side device.

Optionally, the sending the first indication information to the network side device includes:
carrying the first indication information in the second data packet, and sending the second data packet to the network side device;
   or
carrying the first indication information in the preamble, and sending the preamble to the network side device.

Optionally, in the access procedure, sending the first data packet to the network side device includes:
sending the first data packet and a second data packet to the network side device; where the second data packet is a preset data packet or a data size of the second data packet is smaller than a second preset threshold; the second preset threshold is less than or equal to the first preset threshold.

Optionally, the sending the first data packet to the network side device includes:
determining a target subband corresponding to each preamble according to a mapping relationship between the preamble and a subband;
sending the first data packet to the network side device on each target subband.

Optionally, prior to the determining the target subband corresponding to each preamble according to the mapping relationship between the preamble and the subband, the processor performs:
obtaining a frequency band and a preamble resource pre-allocated by the network side device for the terminal;
dividing the frequency band into N subbands, and dividing the preamble resource into M preamble groups; where M is greater than or equal to N; and
establishing the mapping relationship according to the subband and the preamble group.

Optionally, when the first data packet is sent to the network side device during the access procedure, the second data packet includes second indication information of the first data packet; where the second indication information includes at least one of the following configuration parameters:
a time domain position where the first data packet is sent, a frequency domain position where the first data packet is sent, a quantity of PRBs of the first data packet, a subcarrier spacing of the first data packet, and a quantity of symbols used by the first data packet.

Optionally, the second indication information is indicated in the second data packet by a first value; where each first value corresponds to a different configuration parameter combination;
or
each of the configuration parameters in the second indication information is indicated in a preset data bit in the second data packet by a second value; where each second value corresponds to a different value of the configuration parameter.

Optionally, subsequent to the sending the first data packet to the network side device, the processor performs:
receiving response information sent by the network side device.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In Fig. 7, the bus architecture may include any number of interconnected buses and bridges, specifically one or more processors 710 represented by the processor 710 and various circuits of the memory 720 represented by the memory 720 are linked together. The bus architecture can also link together various other circuits such as peripherals, voltage regulators, and power management circuits, etc., which are well known in the art and therefore will not be further described herein. Bus interface 730 provides the interface. Transceiver 740 may be a plurality of elements, including a transmitter and a receiver, providing a unit for communicating with various other devices over transmission media, including wireless channels, wired channels, optical cables, and other transmission media. The processor 710 is responsible for managing the bus architecture and general processing, and the memory 720 may store data used by the processor 710 when performing operations. For different user equipment, the user interface 750 may also be an interface capable of connecting externally and internally to required equipment, and the connected equipment includes but not limited to a keypad, a display, a speaker, a microphone, a joystick, and the like.

The processor 710 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device , CPLD), the processor 710 may also adopt a multi-core architecture.

By calling the computer program stored in the memory 720, the processor 710 is configured to perform any one of the methods provided in the embodiments of the present disclosure according to the obtained executable instructions. The processor 710 and the memory 720 may also be arranged physically separately.

As shown in Fig. 8, an embodiment of the present disclosure also provides a network side device, including a memory 820, a transceiver 840, and a processor 810;
the memory 820 is configured to store computer programs
the transceiver 840 is configured to send and receive data under a control of the processor
the processor 810 is configured to read the computer programs in the memory 820 to perform:
receiving first indication information sent by a terminal in an access procedure of accessing a network side; where the first indication information indicates whether a first data packet is included in a data packet to be transmitted, and a data size of the first data packet is greater than or equal to a first preset threshold.

Optionally, when the first indication information indicates that the data packet to be transmitted includes the first data packet, subsequent to the receiving the first indication information sent by the terminal in the access procedure of accessing the network side, the processor performs:
during the access procedure or after the access procedure is completed, receiving the first data packet sent by the terminal.

Optionally, prior to the receiving the first indication information sent by the terminal in the access procedure of accessing the network side, the processor performs:
receiving a terminal identification (ID) of the terminal.

Optionally, the receiving the terminal ID of the terminal includes:
receiving a second data packet sent by the terminal; where the second data packet carries the terminal ID; where the second data packet is a preset data packet or a data size of the second data packet is smaller than a second preset threshold; the second preset threshold is less than or equal to the first preset threshold;
   or
receiving a preamble of the access procedure sent by the terminal; where the preamble of the access procedure includes the terminal ID.

Optionally, the receiving the first indication information sent by the terminal in the access procedure of accessing the network side includes:
receiving the second data packet sent by the terminal; where the second data packet carries the first indication information;
   or
receiving the preamble sent by the terminal; where the preamble carries the first indication information.

Optionally, the receiving the first data packet sent by the terminal includes:
determining a target subband corresponding to each preamble according to a mapping relationship between the preamble and a subband;
receiving on each target subband the first data packet sent by the terminal.

Optionally, when the first data packet is received during the access procedure, the receiving the first data packet sent by the terminal includes:
receiving second indication information in the second data packet; where the second indication information includes at least one of the following configuration parameters:
a time domain position where the first data packet is sent by the terminal, a frequency domain position where the first data packet is sent by the terminal, a quantity of PRBs of the first data packet, a subcarrier spacing of the first data packet, and a quantity of symbols used by the first data packet.

Optionally, subsequent to the receiving the first data packet sent by the terminal, the processor performs:
sending response information to the terminal.

Optionally, the response information includes at least one of a first confirmation message, a second confirmation message, and data scheduling information;
where the first confirmation message indicates that the first data packet is received by the network side device;
the second confirmation message indicates that the second data packet is received by the network side device;
the data scheduling information indicates time-frequency configuration information for sending the first data packet next time.

In Fig. 8, the bus architecture may include any number of interconnected buses and bridges, specifically one or more processors 810 represented by the processor 810 and various circuits of the memory 820 represented by the memory 820 are linked together. The bus architecture can also link together various other circuits such as peripherals, voltage regulators, and power management circuits, etc., which are well known in the art and therefore will not be further described herein. Bus interface 830 provides the interface. Transceiver 840 may be a plurality of elements, including a transmitter and a receiver, providing a unit for communicating with various other devices over transmission media, including wireless channels, wired channels, optical cables, and other transmission media. The processor 810 is responsible for managing the bus architecture and general processing, and the memory 820 may store data used by the processor 810 when performing operations.

The processor 810 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device , CPLD), the processor 810 may also adopt a multi-core architecture.

By calling the computer program stored in the memory 820, the processor 810 is configured to perform any one of the methods provided in the embodiments of the present disclosure according to the obtained executable instructions. The processor 810 and the memory 820 may also be arranged physically separately.

What needs to be explained here is that the above-mentioned device in an embodiment of the present disclosure can realize all the method steps realized by the above-mentioned method embodiment, and can achieve the same technical effect. The part and the beneficial effect are described in detail.

An embodiment of the present disclosure also provides a processor-readable storage medium, where a computer program is stored in the processor-readable storage medium, and the computer program is used to cause the processor to execute a signal measurement method.

The processor-readable storage medium can be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, nonvolatile memory (NAND FLASH), solid-state drive (SSD)), etc.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart illustrations and/or block diagrams of methods, apparatus (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce Means for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product, the instruction device realizes the function specified in one or more procedures of the flow chart and/or one or more blocks of the block diagram.

These processor-executable instructions can also be loaded onto a computer or other programmable data processing device, causing a series of operational steps to be performed on the computer or other programmable device to produce a computer-implemented The executed instructions provide steps for implementing the functions specified in the flowchart procedure or procedures and/or block diagram procedures or blocks.

The device embodiments described above are only illustrative, and the units described as separate components may or may not be physically separated, and the components shown as units may or may not be physical units, that is, they may be located in one place, or it can be distributed to multiple network elements. Part or all of the modules can be selected according to actual needs to achieve the purpose of the solution of this embodiment. It can be understood and implemented by those skilled in the art without any creative efforts.

The various component embodiments of the present disclosure may be implemented in hardware, or in software modules running on one or more processors, or in a combination thereof. Those skilled in the art should understand that a microprocessor or a digital signal processor (DSP) may be used in practice to implement some or all functions of some or all components in the computing processing device according to the embodiments of the present disclosure. The present disclosure can also be implemented as an apparatus or apparatus program (eg, computer program and computer program product) for performing a part or all of the methods described herein. Such a program realizing the present disclosure may be stored on a computer-readable medium, or may have the form of one or more signals. Such a signal may be downloaded from an Internet site, or provided on a carrier signal, or provided in any other form.

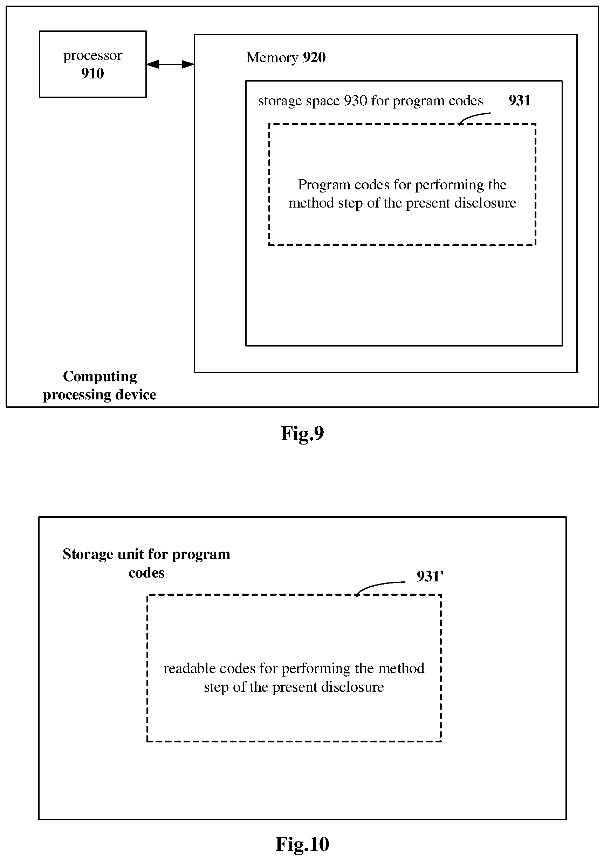

For example, Fig. 9 illustrates a computing processing device that may implement methods according to the present disclosure. The computing processing device conventionally includes a processor 910 and a computer program product or computer readable medium in the form of memory 920. Memory 920 may be electronic memory such as flash memory, EEPROM (Electrically Erasable Programmable Read Only Memory), EPROM, hard disk, or ROM. The memory 920 has a storage space 930 for program code 931 for performing any method steps in the methods described above. For example, the storage space 930 for program codes may include respective program codes 931 for respectively implementing various steps in the above methods. These program codes can be read from or written into one or more computer program products. These computer program products include program code carriers such as hard disks, compact disks (CDs), memory cards or floppy disks. Such a computer program product is typically a portable or fixed storage unit as described with reference to Fig. 10. The storage unit may have storage segments, storage spaces, etc. arranged similarly to the memory 920 in the computing processing device of Fig. 9. The program code can be compressed in a suitable form. Typically, the storage unit includes computer readable code 931 ' , i.e. code readable by, for example, a processor such as 910, which code, when executed by a computing processing device, causes the computing processing device to perform the above-described method each step.

Reference herein to "one embodiment," "an embodiment," or "one or more embodiments" means that a particular feature, structure, or characteristic described in connection with the embodiment is included in at least one embodiment of the present disclosure. Additionally, please note that examples of the word "in one embodiment" herein do not necessarily all refer to the same embodiment.

In the description provided herein, numerous specific details are set forth. However, it is understood that embodiments of the present disclosure may be practiced without these specific details. In some instances, well-known methods, structures and techniques have not been shown in detail in order not to obscure the understanding of this description.

In the claims, any reference signs placed between parentheses shall not be construed as limiting the claim. The word "including" does not exclude the presence of elements or steps not listed in a claim. The word "a" or "an" preceding an element does not exclude the presence of a plurality of such elements. The disclosure can be implemented by means of hardware including several distinct elements, and by means of a suitably programmed computer. In a unit claim enumerating several means, several of these means can be embodied by one and the same item of hardware. The use of the words first, second, and third, etc. does not indicate any order. These words can be interpreted as names.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A data transmission method, applied to a terminal and comprising:
in an access procedure of accessing a network side, sending first indication information to a network side device; wherein the first indication information indicates whether a first data packet is comprised in a data packet to be transmitted, and a data size of the first data packet is greater than or equal to a first preset threshold.

2. The data transmission method according to claim 1, wherein subsequent to the sending the first indication information to the network side device, the method comprises:
when the first indication information indicates that the data packet to be transmitted comprises the first data packet, during the access procedure or after the access procedure is completed, sending the first data packet to the network side device.

3. The data transmission method according to claim 2, wherein prior to the sending the first indication information to the network side device, the method further comprises:
determining a terminal identification (ID) of the terminal, and sending the terminal ID to the network side device.

4. The data transmission method according to claim 3, wherein the sending the terminal ID to the network side device comprises:
carrying the terminal ID in a second data packet, and sending the second data packet to the network side device; wherein the second data packet is a preset data packet or a data size of the second data packet is smaller than a second preset threshold; the second preset threshold is less than or equal to the first preset threshold;
or
generating a preamble of the access procedure according to the terminal ID;
carrying the terminal ID in the preamble of the access procedure, and sending the preamble to the network side device.

5. The data transmission method according to claim 4, wherein the sending the first indication information to the network side device comprises:
carrying the first indication information in the second data packet, and sending the second data packet to the network side device;
or
carrying the first indication information in the preamble, and sending the preamble to the network side device.

6. The data transmission method according to claim 2, wherein in the access procedure, sending the first data packet to the network side device comprises:
sending the first data packet and a second data packet to the network side device; wherein the second data packet is a preset data packet or a data size of the second data packet is smaller than a second preset threshold; the second preset threshold is less than or equal to the first preset threshold.

7. The data transmission method according to claim 4, wherein the sending the first data packet to the network side device comprises:
determining a target subband corresponding to each preamble according to a mapping relationship between the preamble and a subband;
sending the first data packet to the network side device on each target subband.

8. The data transmission method according to claim 7, wherein prior to the determining the target subband corresponding to each preamble according to the mapping relationship between the preamble and the subband, the method comprises:
obtaining a frequency band and a preamble resource pre-allocated by the network side device for the terminal;
dividing the frequency band into N subbands, and dividing the preamble resource into M preamble groups; wherein M is greater than or equal to N; and
establishing the mapping relationship according to the subband and the preamble group.

9. The data transmission method according to claim 4, wherein when the first data packet is sent to the network side device during the access procedure, the second data packet comprises second indication information of the first data packet; wherein the second indication information comprises at least one of the following configuration parameters:
a time domain position where the first data packet is sent, a frequency domain position where the first data packet is sent, a quantity of PRBs of the first data packet, a subcarrier spacing of the first data packet, and a quantity of symbols used by the first data packet.

10. The data transmission method according to claim 9, wherein the second indication information is indicated in the second data packet by a first value; wherein each first value corresponds to a different configuration parameter combination;
or
each of the configuration parameters in the second indication information is indicated in a preset data bit in the second data packet by a second value; wherein each second value corresponds to a different value of the configuration parameter.

11. The data transmission method according to claim 4, wherein subsequent to the sending the first data packet to the network side device, the method comprises:
receiving response information sent by the network side device.

12. The data transmission method according to claim 11, wherein the response information comprises at least one of a first confirmation message, a second confirmation message, and data scheduling information;
wherein the first confirmation message indicates that the first data packet is received by the network side device;
the second confirmation message indicates that the second data packet is received by the network side device;
the data scheduling information indicates time-frequency configuration information for sending the first data packet next time.

13. A data transmission method, applied to a network side device and comprising:
receiving first indication information sent by a terminal in an access procedure of accessing a network side; wherein the first indication information indicates whether a first data packet is comprised in a data packet to be transmitted, and a data size of the first data packet is greater than or equal to a first preset threshold.

14. The data transmission method according to claim 13, wherein when the first indication information indicates that the data packet to be transmitted comprises the first data packet, subsequent to the receiving the first indication information sent by the terminal in the access procedure of accessing the network side, the method comprises:
during the access procedure or after the access procedure is completed, receiving the first data packet sent by the terminal.

15. The data transmission method according to claim 14, wherein prior to the receiving the first indication information sent by the terminal in the access procedure of accessing the network side, the method further comprises:
receiving a terminal identification (ID) of the terminal.

16. The data transmission method according to claim 15, wherein the receiving the terminal ID of the terminal comprises:
receiving a second data packet sent by the terminal; wherein the second data packet carries the terminal ID; wherein the second data packet is a preset data packet or a data size of the second data packet is smaller than a second preset threshold; the second preset threshold is less than or equal to the first preset threshold;
or
receiving a preamble of the access procedure sent by the terminal; wherein the preamble of the access procedure comprises the terminal ID.

17. The data transmission method according to claim 16, wherein the receiving the first indication information sent by the terminal in the access procedure of accessing the network side comprises:
receiving the second data packet sent by the terminal; wherein the second data packet carries the first indication information;
or
receiving the preamble sent by the terminal; wherein the preamble carries the first indication information.

18. The data transmission method according to claim 16, wherein the receiving the first data packet sent by the terminal comprises:
determining a target subband corresponding to each preamble according to a mapping relationship between the preamble and a subband;
receiving on each target subband the first data packet sent by the terminal.

19. The data transmission method according to claim 16, wherein when the first data packet is received during the access procedure, the receiving the first data packet sent by the terminal comprises:
receiving second indication information in the second data packet; wherein the second indication information comprises at least one of the following configuration parameters:
a time domain position where the first data packet is sent by the terminal, a frequency domain position where the first data packet is sent by the terminal, a quantity of PRBs of the first data packet, a subcarrier spacing of the first data packet, and a quantity of symbols used by the first data packet.

20. The data transmission method according to claim 16, wherein subsequent to the receiving the first data packet sent by the terminal, the method comprises:
sending response information to the terminal.

21. The data transmission method according to claim 20, wherein the response information comprises at least one of a first confirmation message, a second confirmation message, and data scheduling information;
wherein the first confirmation message indicates that the first data packet is received by the network side device;
the second confirmation message indicates that the second data packet is received by the network side device;
the data scheduling information indicates time-frequency configuration information for sending the first data packet next time.

22. A terminal, comprising:
a memory, a transceiver, a processor:
the memory is configured to store computer programs; the transceiver is configured to send and receive data under a control of the processor; the processor is configured to read the computer programs in the memory to perform:
in an access procedure of accessing a network side, sending first indication information to a network side device; wherein the first indication information indicates whether a first data packet is comprised in a data packet to be transmitted, and a data size of the first data packet is greater than or equal to a first preset threshold.

23. The terminal according to claim 22, wherein subsequent to the sending the first indication information to the network side device, the processor performs:
when the first indication information indicates that the data packet to be transmitted comprises the first data packet, during the access procedure or after the access procedure is completed, sending the first data packet to the network side device.

24. The terminal according to claim 23, wherein prior to the sending the first indication information to the network side device, the processor performs:
determining a terminal identification (ID) of the terminal, and sending the terminal ID to the network side device.

25. The terminal according to claim 24, wherein the sending the terminal ID to the network side device comprises:
carrying the terminal ID in a second data packet, and sending the second data packet to the network side device; wherein the second data packet is a preset data packet or a data size of the second data packet is smaller than a second preset threshold; the second preset threshold is less than or equal to the first preset threshold;
or
generating a preamble of the access procedure according to the terminal ID;
carrying the terminal ID in the preamble of the access procedure, and sending the preamble to the network side device.

26. The terminal according to claim 25, wherein the sending the first indication information to the network side device comprises:
carrying the first indication information in the second data packet, and sending the second data packet to the network side device;
or
carrying the first indication information in the preamble, and sending the preamble to the network side device.

27. A network side device, comprising:
a memory, a transceiver, a processor:
the memory is configured to store computer programs; the transceiver is configured to send and receive data under a control of the processor; the processor is configured to read the computer programs in the memory to perform:
receiving first indication information sent by a terminal in an access procedure of accessing a network side; wherein the first indication information indicates whether a first data packet is comprised in a data packet to be transmitted, and a data size of the first data packet is greater than or equal to a first preset threshold.

28. A data transmission apparatus, applied to a terminal and comprising:
an information sending module, configured to, in an access procedure of accessing a network side, send first indication information to a network side device; wherein the first indication information indicates whether a first data packet is comprised in a data packet to be transmitted, and a data size of the first data packet is greater than or equal to a first preset threshold.

29. A data transmission apparatus, applied to a network side device and comprising:
an information receiving module, configured to receive first indication information sent by a terminal in an access procedure of accessing a network side; wherein the first indication information indicates whether a first data packet is comprised in a data packet to be transmitted, and a data size of the first data packet is greater than or equal to a first preset threshold.

30. A processor-readable storage medium, wherein the processor-readable storage medium stores a computer program, and the computer program is configured to enable the processor to perform the method according to any one of claims 1 to 12 or any one of claims 13 to 21.

31. A computer program, comprising computer readable codes, wherein computer readable codes run on a computing processing device, to enable the computing processing device to perform the method according to any one of claims 1 to 12 or any one of claims 13 to 21.
